# EUROPEAN PATENT APPLICATION

(11) **EP 2 946 688 A1**
(43) Date of publication of application: **25.11.2015**
(21) Application number: 15397523.0
(22) Date of filing: 13.05.2015
(51) Int. Cl.: A45F 5/10, F16L 3/10

(54) **AN APPARATUS FOR CARRYING AND STORING PIPES**

(30) Priority: 21.05.2014 FI 20145457
(71) Applicant: Sejo Oy, 01740 Vantaa (FI)
(72) Inventor: Salonen, Pasi, 01300 Vantaa (FI)
(74) Representative: Boco IP Oy Ab

(57) **Abstract**

The invention relates to an apparatus for carrying and storing pipes wherein the apparatus comprises
- a handle 10 for carrying the apparatus,
- a first frame 20 comprising at least two pipe holder parts 30 for receiving pipes,
- a retainer 40 for preventing lateral movement of the pipes received in the pipe holder parts, and
- a support means 50 for supporting the apparatus on a level surface.

## Description

### FIELD OF THE INVENTION

The invention relates to a carrying apparatus, and particularly to an apparatus for carrying and storing pipes.

### BACKGROUND OF THE INVENTION

Traditionally pieces of air condition channel or drain pipe are carried separately on a construction site.

A problem with this is that separate pipe segments are difficult to carry in hand or on shoulder. When carrying pipe segments on shoulder, the pipe might partly block the person's vision increasing the risk of accidents.

### BRIEF DESCRIPTION OF THE INVENTION

An object of the present invention is to provide an apparatus so as to overcome the above problems.

The objects of the invention are achieved by an apparatus which is characterized by what is stated in the independent claim. The preferred embodiments of the invention are disclosed in the dependent claims.

The invention is based on the idea of providing an apparatus for carrying and storing pipes, wherein the apparatus comprises
a handle for carrying the apparatus,
a first frame comprising at least two pipe holder parts for receiving pipes,
a retainer for preventing movement of the pipes received in the pipe holder parts in relation to the apparatus, and
a support means for supporting the apparatus on a level surface..

An advantage of the apparatus of the invention is that the apparatus allows carrying several pipes with one hand. Since the pipes are held together by the apparatus, it eases carrying the pipes especially in tight and difficult places. The apparatus also allows carrying pipes without blocking vision. When using the apparatus, the person carrying need not to concentrate on holding the pipes together. The apparatus also allows tidy storage of pipes.

### BRIEF DESCRIPTION OF THE DRAWINGS

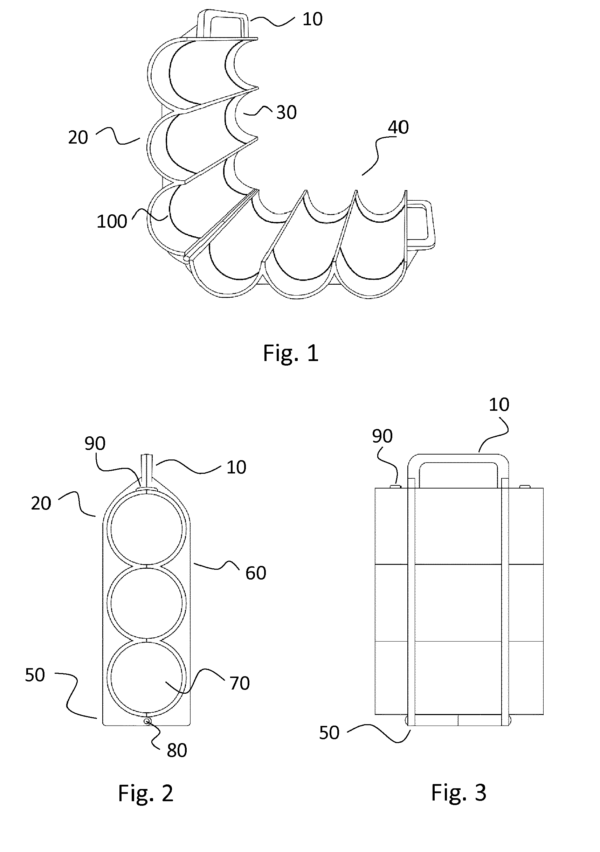

In the following the invention will be described in greater detail by means of preferred embodiments with reference to the accompanying drawings, in which
Figure 1 is an angled view of an embodiment of the invention in an open position;
Figure 2 is a front view of an embodiment of the invention in a closed position; and
Figure 3 is a side view of an embodiment of the invention.

### DETAILED DESCRIPTION OF THE INVENTION

The invention relates to an apparatus for carrying and storing pipes wherein the apparatus comprises
- a handle 10 for carrying the apparatus,
- a first frame 20 comprising at least two pipe holder parts 30 for receiving pipes,
- a retainer 40 for preventing movement of the pipes received in the pipe holder parts in relation to the apparatus, and
- a support means 50 for supporting the apparatus on a level surface.

The cross section of the pipe holder parts 30 should match the shape of the pipes to be carried. According to an embodiment the cross section of the pipe holder parts 30 is semi-circular. Preferably the radius of the pipe holder parts 30 is between 30 to 150 mm, more preferably between 40 to 110 mm and most preferably between 55 to 110 mm.

For example the retainer 40 is a strap running from the bottom of the first frame 20 to the top holding the pipes in place in the pipe holder parts. According to an embodiment the retainer 40 comprises a second frame 60 comprising a number of pipe holder parts 30 corresponding the number of pipe holder parts 30 of the first frame, wherein the pipe holder parts 30 of the first frame 20 and the pipe holder parts 30 of the second frame 60 form pipe holders 70 for holding pipes between the first frame 20 and the second frame 60 when the first frame 20 and the second frame 60 are positioned opposite to each other in contact with each other.

According to an embodiment the cross section of the pipe holders 70 is circular. Preferably the diameter of the pipe holders 70 is between 60 to 300 mm, more preferably between 80 to 220 mm and most preferably between 110 to 220 mm. Preferably the apparatus comprises a first end and a second end. Preferably the handle 10 has been provided in the first end of the apparatus.

Preferably the handle 10 has been provided in the first frame. Preferably the handle 10 is formed by a first handle 10 part comprised in the first frame 20 and a second handle 10 part comprised in the second frame. When the frames are positioned opposite to each other in contact with each other, the first handle 10 part and the second handle 10 part form a handle.

According to an embodiment the second frame 60 has been connected to the first frame 20 by a hinge 80 for allowing the apparatus to be set between an open position and a closed position, wherein
- in the closed position the first frame 20 is parallel with the second frame, and
- in the open position the first frame 20 defines an angle with the second frame 60 for setting the pipes in the pipe holder parts.

Preferably the hinge 80 has been provided in the second end of the apparatus, i.e. the end of the apparatus opposite the handle.

Preferably the rotation axis of the hinge 80 is parallel to the axes of the pipes to be received in the pipe holder parts.

According to an embodiment the apparatus comprises locking means 90 for preventing movement of the second frame 60 in relation to the first frame 20 when the apparatus is set in the closed position. Locking means 90 prevent the apparatus from opening during transportation or storage, and thus releasing the pipes from the apparatus.

According to an embodiment the pipe holder parts 30 comprise slip guards 100 for inhibiting axial movement of the pipes in relation to the apparatus. The slip guards 100 increase friction between the pipe holder parts 30 and the pipes to be carried for preventing axial slipping of the pipes.

According to an embodiment the pipe holder parts 30 have been removably attached to each other. Attaching the pipe holder parts 30 removably to each other allows adding more pipe holder parts 30 to the apparatus. This allows carrying more pipes simultaneously with the apparatus.

According to an embodiment the first frame 20 and the second frame 60 have an identical shape. This allows easier production since there is no need to produce two different shapes of frames.

According to an embodiment the apparatus comprises inserts for the pipe holder parts 30 for fitting pipes having smaller radius than the radius of the pipe holder parts. The inserts may be removably attached to the pipe holder parts. Preferably the inserts have been made of elastic material for conforming to different sizes of pipes. According to an embodiment the inserts acts as slip guards.

According to an embodiment the pipe holder parts 30 consist of semi-tubular members.

According to an embodiment the support means 50 have been arranged to keep the apparatus in upright position when it is set on a level surface.

According to an embodiment the pipe holder parts 30 have been arranged to hold pipes parallel on top of each other and in a plane defined by the handle 10 and the center axes of the pipes.

According to an embodiment the support means 50 have been arranged to support the apparatus in such a position where the plane defined by the handle 10 and the center axes of the pipes is perpendicular to the level surface.

According to an embodiment the retainer 40 has been arranged to prevent lateral movement of the pipes received in the pipe holder parts 30 in relation to the apparatus.

Preferably the first frame 20 or the first frame 20 and the second frame 60 have been made of plastic.

## Claims

1. An apparatus for carrying and storing pipes wherein the apparatus comprises
- a handle (10) for carrying the apparatus,
- a first frame (20) comprising at least two pipe holder parts (30) for receiving pipes,
- a retainer (40) for preventing movement of the pipes received in the pipe holder parts (30) in relation to the apparatus, and
- a support means (50) for supporting the apparatus on a level surface
**characterized in that**
the retainer (40) comprises a second frame (60) comprising a number of pipe holder parts (30) corresponding the number of pipe holder parts (30) of the first frame, wherein the pipe holder parts (30) of the first frame (20) and the pipe holder parts (30) of the second frame (60) form pipe holders (70) for holding pipes between the first frame (20) and the second frame (60) when the first frame (20) and the second frame (60) are positioned opposite to each other in contact with each other.

2. An apparatus according to claim 1, **characterized in that** the cross section of the pipe holder parts (30) is semi-circular.

3. An apparatus according to claim 1, **characterized in that** the second frame (60) has been connected to the first frame (20) by a hinge (80) for allowing the apparatus to be set between an open position and a closed position, wherein
- in the closed position the first frame (20) is parallel with the second frame, and
- in the open position the first frame (20) defines an angle with the second frame (60) for setting the pipes in the pipe holder parts.

4. An apparatus according to claim 3, **characterized in that** the apparatus comprises locking means (90) for preventing movement of the second frame (60) in relation to the first frame (20) when the apparatus is set in the closed position.

5. An apparatus according to any one of the preceding claims, **characterized in that** the pipe holder parts (30) comprise slip guards (100) for inhibiting axial movement of the pipes in relation to the apparatus.

6. An apparatus according to any one of the preceding claims, **characterized in that** the pipe holder parts (30) have been removably attached to each other.

7. An apparatus according to any one of the preceding claims, **characterized in that** the first frame (20) and the second frame (60) have an identical shape.

8. An apparatus according to any one of the preceding claims, **characterized in that** the apparatus comprises inserts for the pipe holder parts (30) for fitting pipes having smaller radius than the radius of the pipe holder parts.

9. An apparatus according to any one of the preceding claims, **characterized in that** the pipe holder parts (30) consist of semi-tubular members.

10. An apparatus according to any one of the preceding claims, **characterized in that** the support means (50) have been arranged to keep the apparatus in upright position when it is set on a level surface.

11. An apparatus according to any one of the preceding claims, **characterized in that** the pipe holder parts (30) have been arranged to hold pipes parallel on top of each other and in a plane defined by the handle (10) and the center axes of the pipes.

12. An apparatus according to claim 11, **characterized in that** the support means (50) have been arranged to support the apparatus in such a position where the plane is perpendicular to the level surface.

13. An apparatus according to any one of the preceding claims, **characterized in that** the retainer (40) has been adapted to prevent lateral movement of the pipes received in the pipe holder parts (30) in relation to the apparatus.
